# EUROPEAN PATENT APPLICATION

(11) **EP 2 006 754 A2**
(43) Date of publication of application: **24.12.2008**
(21) Application number: 08011328.5
(22) Date of filing: 23.06.2008
(51) Int. Cl.: G05D 23/02

(54) **Thermostat device for radiators**

(30) Priority: 22.06.2007 IT VA20070056
(71) Applicant: Technosprings Italia S.r.L., 21020 Besnate (VA) (IT)
(72) Inventor: Gualandris, Romano, 21013 Gallarate (Varese) (IT); Stortiero, Francesco, 20099 Sesto S.Giovanni (Milano) (IT)
(74) Representative: Lunati, Vittoriano

(57) **Abstract**

There is provided a thermostat device (1) for radiators, suitable to regulate at least opening and closing of a regulation valve (100) of a radiator, and comprising: a fixed portion (2), integral with the radiator, a moving portion (3) in axial direction (1a) suitable to control at least opening or closing of the regulation valve (100) and characterized in that it comprises: at least an element (4) made of shape memory metal material suitable to move the moving portion (3) as a function of the temperature of the device (1).

## Description

The present invention relates to a thermostat device for radiators of the type specified in the preamble of claim 1.

There are currently known different thermostat devices for radiators and the like.

These are based on the opening or closing of a specific valve suitable to open or close a pipe that supplies the radiator with water at high temperatures.

Therefore, opening or closing of said valve determines the temperature of the radiator and, consequently, the temperature of the room in which this radiator is located.

Among said devices, the use of "wax thermostats", which act automatically as a function of the temperature, is particularly widespread.

Said thermostat devices comprise an element including a mass of wax suitable to expand or contract as a function of the temperature. Expansion and contraction of said mass of wax moves a piston connected to said valve and suitable to control it.

In particular, when the temperature inside the radiator is high, the mass of wax presents a high volume and thrusts the valve to the position to close the hot water pipe.

However, when the radiator temperature is lower, the mass of wax presents a reduced volume and disposes the valve in a position to open the pipe, so as to allow hot water to enter the radiator and increase the temperature thereof.

The wax thermostats described also comprise a regulating system that allows opening or closing of said valve to take place with greater or lesser degrees of expansion of the mass of wax, so as to allow opening and closing of this valve at different temperatures.

The wax thermostats described achieve the important advantage of allowing automatic regulation of the temperature inside the radiator, without the need to take action by means of continuous manual regulations, or for more complex thermometers connected to actuators.

However, the aforesaid prior art presents some important drawbacks.

In fact, wax thermostat devices have high thermal inertia. Consequently, they act with considerable delay and imply a high energy consumption.

Moreover, due to said high thermal inertia, the desired heating temperature is reached after temporarily reaching a higher temperature than said desired temperature.

This reaching of a higher temperature can cause overtravel of the piston that controls the valve described. This overtravel can cause damage and breakage of this valve.

In this situation, the technical aim of the present invention is to devise a thermostat device for radiators that is capable of substantially overcoming the aforesaid drawbacks.

Within said technical aim, an important object of the invention is to obtain a thermostat device for radiators with reduced thermal inertia.

Another important object of the invention is to produce a thermostat device for radiators that is simple and is not subject to breakages or malfunctions.

The technical aim and the objects specified are achieved by a thermostat device for radiators characterized in that it comprises one or more of the new technical solutions described and claimed below.

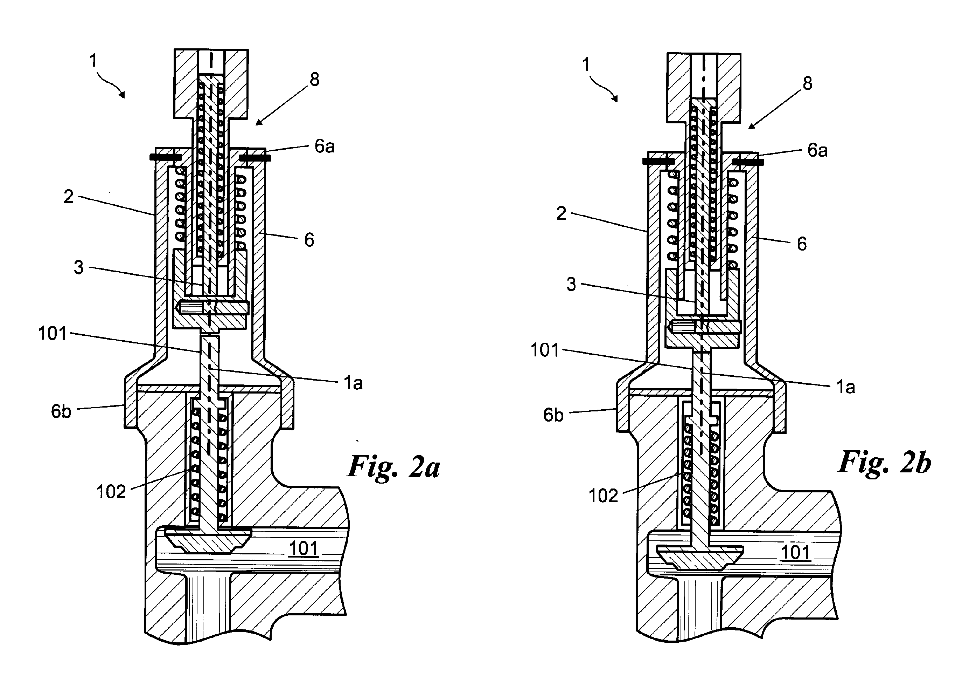

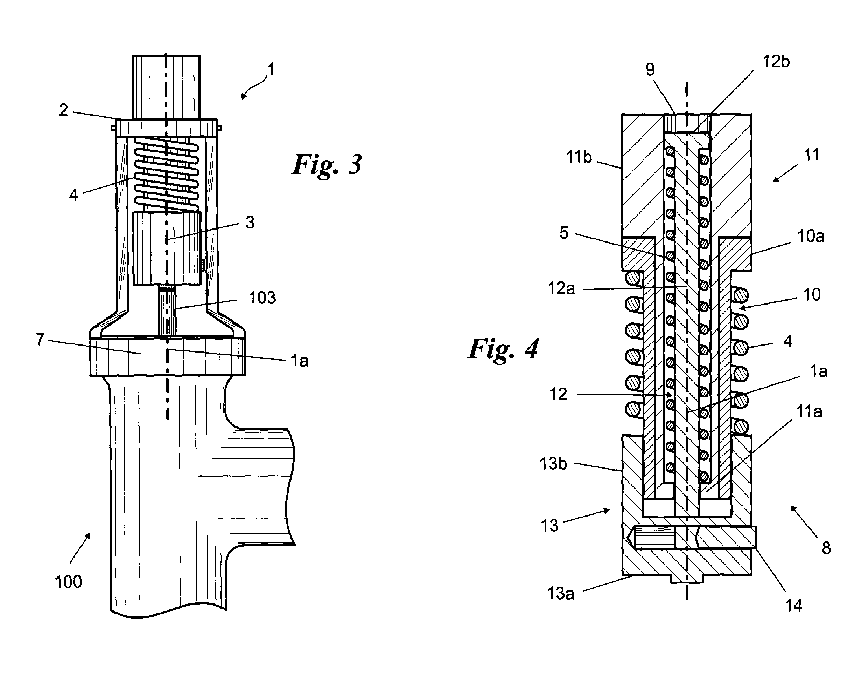

The accompanying drawings show by way of example preferred embodiments of the invention. In particular:

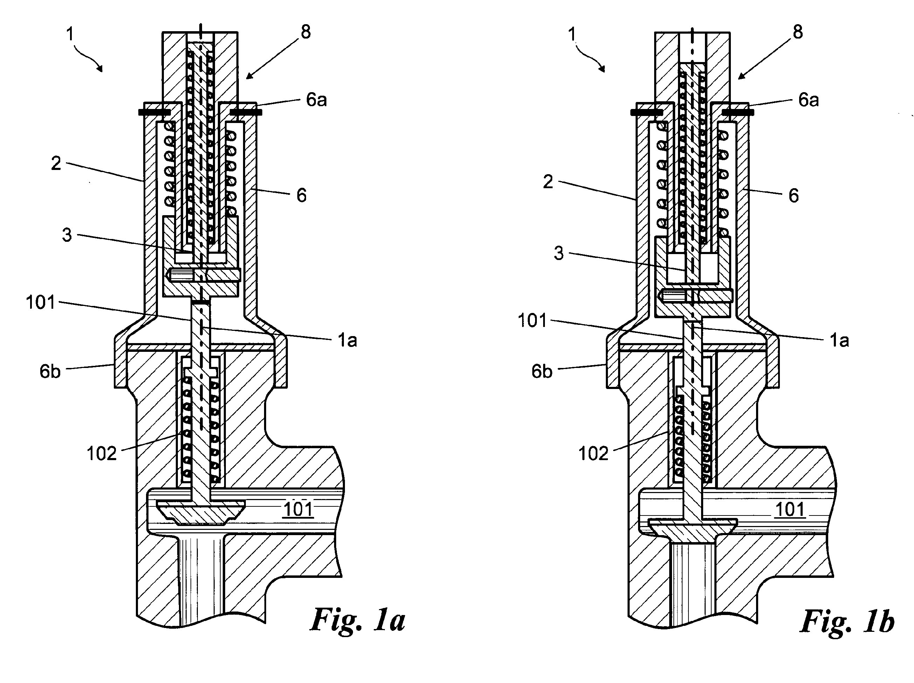

**Fig. 1a** shows, in a median cross section, the device according to the invention in a first configuration;
**Fig. 1b** shows, in a median cross section, the device according to the invention in a second configuration;
**la** **Fig. 2a** shows, in a median cross section, the device according to the invention in a third configuration;
**la** **Fig. 2b** shows, in a median cross section, the device according to the invention in a fourth configuration;
**la** **Fig. 3** shows the device according to the invention in an overall view; and
**la** **Fig. 4** shows a cross section of a portion of the device according to the invention.

With reference to the Figures, the thermostat device according to the invention is indicated as a whole with the number **1.**

The thermostat device 1 is suitable to regulate a regulation valve **100** suitable to control opening and closing of a pipe **101** to supply hot fluid to a radiator.

Said regulation valve 100 is known per se and appropriately realized by a plunger valve including a control piston **103** whose movement in axial direction **1a** causes opening, closing or simple regulation of the regulation valve 100.

In particular, the regulation valve 100 is available in an open position, shown in Figs. 1a and 2a, in which said piston 103 exits from the structure thereof, and in a closed position, shown in Figs. 1b and 2b, in which said piston 103 is at least partly inserted inside the structure of the valve 100.

The control piston 103 acts in opposition to an elastic element **102** inside the regulation valve 100 and suitably to maintain the valve 100 and the control piston 103 in an open position.

The thermostat device 1 comprises a fixed portion **2,** integral with the radiator, a moving portion **3,** translatable in axial direction **1a** with respect to the radiator and suitable to control the regulation valve 100, an actuator element **4** made of shape memory metal material suitable to move the moving portion 3.

The device 1 is appropriately made of metal material or the like.

More in particular, the fixed portion 2 comprises an outer structure **6** including constraining means 7, suitable to connect the thermostat device 1 to the pipe 101, or in general to the radiator and appropriately realized by a threaded element that can be screwed onto a second threaded element produced on the pipe 101.

Said outer structure 6 is appropriately bell shaped having a section with a larger diameter at the level of the constraining means 7, and a smaller tubular diameter at the remaining part of the thermostat device 1.

This outer structure 6 presents, at the lower end **6a** and upper end **6b,** a centrosymmetric structure with respect to the axial direction 1a, while the remaining part presents two laminar profiles that connect said ends 6a and 6b, as shown in Fig. 3.

The fixed portion 2 also comprises an inner structure **8,** shown in Figs. 1a, 1b, 2a, 2b and 4, disposed inside the outer structure 6 and integral therewith.

The inner structure 8 preferably has a centrosymmetric structure with respect to the axial direction 1a and comprises a central cavity **9** suitable to house an elastic element 4 or 5 and a part of the moving portion 3, as described below.

The inner structure 8 is also composed of a stable element **10** and an adjustable fixed portion **11.**

The stable element 10 is directly connected to the outer structure 6, appropriately at the upper end 6b of the outer structure, by means of specific constraints, for instance realized by screws or splined pins.

Moreover, said stable element 10 is made of metal material and presents a tubular profile having a smaller diameter than the smallest diameter of the outer structure 6 and comprising a step **10a** at the connection with the outer structure 6.

The adjustable fixed portion 11 is connected to the stable element 10 by means of a thread or the like, suitable to allow movement of this adjustable fixed portion 11 in axial direction 1a, with respect to the stable element and consequently to the radiator.

Unlike the moving portion 3, the adjustable fixed portion 11 is not moved by the elastic elements 4 or 5, but can be moved manually or through specific systems.

The adjustable fixed portion 11 is structurally realized by a tubular portion positioned inside the stable element 10, and presents a stop wall **11a** at the end closest to the piston 103 and a grippable portion **11b** at the opposite end.

The moving portion 3 is preferably realized by a stem **12** and by a thrust element **13.** The stem 12 and the thrust element 13 are mutually constrained by means of a specific constraint **14** realized by a screw, a grub screw or the like.

More in particular, the thrust element 13 comprises a thrust head **13a,** and a sleeve **13b.** The head 13a is realized by a cylindrical portion suitable to come into contact with the piston 103, while said sleeve 13b is realized by a tubular portion covering part of the stable element 10 and suitable to slide thereon, as shown in Figs. 1a and 1b.

The stem 12 instead appropriately comprises a rod element **12a,** available inside the central cavity 9 and having a smaller diameter than the smallest diameter of this central cavity 9, realized at the stop wall 11a, and a retaining head **12b** disposed at the grippable portion 11b and having a width appropriately smaller than the diameter of the central cavity 9. The rod 12 is also suitable to slide in relation to the fixed portion 2 in axial direction 1a.

The actuator element 4 is suitable to regulate the position of the moving portion 3 as a function of the temperature and is made of shape memory metal material.

As it is known, shape memory materials present at least two different phases of crystalline structure at temperatures close to the operating and using temperatures thereof. At said temperatures, shape memory materials take different mechanical and/or geometric characteristics.

Due to said particularities, it is possible to vary the geometry or mechanical characteristics of an element made of shape memory material by varying its temperature.

In particular, there are known shape memory alloys (SMA) presenting at least two different phases of crystalline structure at temperatures close to the operating temperatures, the different phases of which imply different physical properties such as moduli of elasticity or Young's moduli.

Moreover, said shape memory materials present at least a range of temperatures at which the physical geometric characteristics thereof vary substantially in a manner directly proportional to this temperature.

The actuator element 4 is preferably realized by an elastic element, appropriately realized by a helical spring.

In particular, the actuator element 4 realized by an elastic element is suitable to vary the elastic constant within a range of operating temperatures.

It is preferably produced in binary SMA of the type NiₓTi₁₀₀₋ₓ with 49at%<x<51at% and/or ternary SMA of the type NiTiX, where X=Cu, Cr, Hf, Pd, Pt, Nb.

The elastic constant of the elastic element in fact varies proportionally to the modulus of elasticity of the material, consequently an elastic element made of shape memory material presents different elastic constants at different temperatures.

It must be stressed that substantially all materials present slight differences in modulus of elasticity as a function of the temperatures, in particular in proximity of the fusion temperatures. However, said differences of modulus of elasticity cannot be used for the purpose of the device 1 as they are too small. Differently, shape memory materials present moduli of elasticity having values that vary greatly during crystalline phase transformation, which occurs in limited temperature ranges, as in the case mentioned above.

The actuator element 4 realized by a helical spring is appropriately disposed between the outer structure 6 and the stable element 10, more in particular it is resting against the thrust head 13a, part of the moving portion 3, and against the step 10a, part of the fixed portion 2.

The actuator element 4 is thus suitable to exert a thrust that moves the thrust head 13a toward the piston 103 and causes closing, even partial, of the regulation valve 100, in opposition to the elastic element 102 inside the regulation valve 100.

The device 1 comprises moreover preferably a second elastic element 5, acting in opposition to the actuator element 4 and in agreement with the elastic element 102 inside the regulation valve 100 and made of steel for springs or of another metal having an elastic constant that does not vary when the temperature varies.

t is appropriately realized by a helical spring disposed inside the cylindrical cavity 9, in particular it is disposed between the rod element 12a and the adjustable fixed portion 11. This second elastic element 5 is also appropriately resting against the retaining head 12b, part of the moving portion 3 and against the stop wall 11a, part of the adjustable fixed portion 11.

Said second elastic element 5 is thus suitable to exert a thrust that move the thrust head 13a away from the piston 103 and opens, even only partially, the regulation valve 100.

Operation of a thermostat device 1, the structure of which is described above, is as follows.

In a first configuration, the adjustable fixed portion 11 is fixed in a first position, as shown in Figs. 1a and 1b.

In said configuration, at a first temperature, the actuator element realized by the elastic element 4, the second elastic element 5 and the elastic element 102 inside the regulation valve 100, reach an equilibrium at a position in which the thrust head 13a does not thrust the piston 103 and the valve remains open, as shown in Fig. 1.

In said position, the regulation valve 100 allows high temperature liquid to flow into the radiator and heating of this radiator and, consequently, of the surrounding environment.

Subsequently, when the environment has reached the required temperature, the device 1 is taken to a second temperature higher than said first temperature.

At said second temperature, the actuator element 4 presents a higher elastic constant than the elastic constant presented by this actuator element 4 at said first temperature.

Due to said variation in the elastic constant of the actuator element 4, the two elastic elements 4 and 5 reach a different equilibrium and the device is in a second configuration shown in Fig. 1b.

In particular, the actuator element 4 exerts a force greater than the force exerted in the described first configuration.

It therefore thrusts the moving portion 3 toward the piston 103, causing closing, even only partial, of the regulation valve 100.

In the described second configuration the regulation valve 100 does not allow the hot fluid to flow into the radiator, and therefore maintains this radiator at the current temperature.

If the temperature of the environment were to return to lower levels, the device 1 would return to the described first configuration of the regulation valve 100, once again allowing the high temperature liquid to flow into the radiator.

In a third and fourth configuration, the device 1 is respectively at the same first and second temperature of the described first and second configuration.

However, in said third and fourth configuration, the thermostat device 1 presents the adjustable fixed portion 11 disposed in a different position with respect to the described first and second configuration, as shown in Figs. 2a and 2b.

In particular, in the third configuration, shown in Fig. 2a, the adjustable fixed portion 11 is moved away from the stable element 10. Consequently, the second elastic element 5 is compressed and the three elastic elements 4, 5 and 102 find a new equilibrium in which the thrust head 13a is farther from the piston 103 at said first temperature, with respect to the first configuration described.

Similarly, at said second temperature, in the fourth configuration shown in Fig. 2b, the thrust head 13a moves the piston 103 away by a smaller travel with respect to the closing 11 performed in the second configuration described, partially closing the regulation valve 100.

In the third and fourth configuration described, the regulation valve 100 thus allows a greater flow of fluid into the radiator at the same temperature, and therefore a higher temperature of this radiator and of the environment in which it is located.

The invention achieves important advantages.

In fact, the thermostat device 1, based on the presence of elastic elements made of shape memory material presents a very low thermal inertia, due to the extremely low thermal inertia of the metal materials.

This low thermal inertia allows considerable savings of energy, the required temperature to be reached more rapidly, improved regulation of this temperature and, finally, it does not present the overtravel that occurs in thermostat devices including masses of wax.

Moreover, the device 1 presents a very simple structure that allows intuitive regulation of the temperature and, moreover, has very low maintenance costs and very few faults.

The invention is susceptible to modifications and variants falling within the scope of the inventive concept.

In particular, the second elastic element 5 can also be excluded. In this case, the actuator element 4 only acts in opposition to the elastic element 102 inside the regulation valve 100 and the device 1 presents some variants obvious to those skilled in the art.

All details can be replaced with equivalent elements and the materials, shapes and dimensions can be any.

## Claims

1. Thermostat device (1) for radiators, suitable to regulate a regulation valve (100) of said radiator, and comprising: a fixed portion (2), integral with said radiator, a moving portion (3) in axial direction (1a) functionally connected to said regulation valve (100), the position of said moving portion (3) being suitable to regulate said regulation valve (100) and **characterized in that** it comprises: at least an actuator element (4) made of shape memory metal material suitable to move said moving portion (3) as a function of the temperature of said device (1).

2. Device according to Claim 1, wherein said actuator element (4) made of shape memory metal material is an elastic element suitable to vary the elastic constant as a function of the temperature.

3. Device according to Claim 1, wherein said actuator element (4) acts in opposition to a second elastic element (5) having an elastic constant that does not vary as a function of the temperature.

4. Device according to Claims 2 or 3, wherein said actuator element (4) acts in opposition to an elastic element (102) disposed inside said regulation valve (100).

5. Device according to one or more of the preceding Claims, wherein said fixed portion (2) comprises an adjustable fixed portion (11), suitable to vary the position of said moving portion (3) regardless of the temperature of said device.

6. Device according to one or more of the preceding Claims, wherein said actuator element (4) is made of a shape memory alloy (SMA).

7. Device according to Claim 6, wherein said actuator element (4) is a binary SMA of the type NiₓTi₁₀₀₋ₓ with 49at%<x<51at%.

8. Radiator comprising a regulation valve (100) suitable to allow or prevent access of a high temperature fluid into said radiator and including a thermostat device (1) according to one or more of the preceding Claims.
